# EUROPÄISCHE PATENTSCHRIFT

(11) **EP 3 412 485 B1**
(45) Veröffentlichungstag und Bekanntmachung des Hinweises auf die Patenterteilung: **02.09.2020**
(21) Anmeldenummer: 18173483.1
(22) Anmeldetag: 22.05.2018
(51) Int. Cl.: B60K 1/00, B60K 17/08, B60K 17/36

(54) **ACHSGETRIEBEMODUL**
AXLE DRIVE UNIT
MODULE DE TRANSMISSION D'ESSIEU

(30) Priorität: 06.06.2017 DE 102017112405
(43) Veröffentlichungstag der Anmeldung: 12.12.2018
(73) Patentinhaber: MAN Truck & Bus SE, 80995 München (DE)
(72) Erfinder: Braykoff, Christo, 80997 München (DE)
(74) Vertreter: v. Bezold & Partner Patentanwälte - PartG mbB

(56) Entgegenhaltungen:
- EP-A1- 0 456 096
- EP-A1- 2 797 766
- EP-A2- 3 020 588
- DE-A1-102015 208 825
- US-A- 2 236 696
- US-A1- 2005 109 549

## Beschreibung

Die Erfindung betrifft ein Achsgetriebemodul für ein Kraftfahrzeug.

Der Antriebsstrang eines Kraftfahrzeugs kann ein Achsgetriebe aufweisen. Das Achsgetriebe lenkt bei längsliegender Antriebseinheit ein Antriebsmoment um 90° auf die Radwellen um. Bei einer querliegenden Antriebseinheit muss das Antriebsmoment nicht umgelenkt werden und die Drehmomentübertragung kann mittels Stirnräder realisiert werden. Es ist ferner bekannt, dass Antriebsstränge von beispielsweise Nutzfahrzeugen mit einer Tandemachse mit zwei angetriebenen Achsen einen Durchtrieb aufweisen können. Über den Durchtrieb wird die Antriebskraft auf die beiden angetriebenen Achsen aufgeteilt. Bekannte Durchtriebsachsen können eine Stirnradstufe mit einer Übersetzung von 1 aufweisen.

Ein Achsgetriebe mit Kegelradstufe für ein Nutzfahrzeug ist beispielsweise in der DE 100 43 622 A1 offenbart. Eine Durchtriebsachse ist beispielsweise in der DE 30 09 502 A1 offenbart. In der DE 10 2013 021 008 A1 ist ein Durchtrieb offenbart, der auf einer Seite mit einem Antriebsmotor und auf einer gegenüberliegenden Seite mit einer Elektromaschine verbunden ist.

Bei der Umstellung von Antriebssträngen mit herkömmlichem Verbrennungsmotor auf Antriebsstränge mit (zentralem) Elektroantrieb kann es notwendig sein, im Antriebsstrang ein zusätzliches Anpassgetriebe (Reduziergetriebe) vorzusehen. Das Anpassgetriebe untersetzt die Drehzahl des Elektroantriebs.

Das Vorsehen eines separaten Anpassgetriebes kann jedoch nachteilig sein, da zusätzlicher Bauraum benötigt wird. Außerdem können die zusätzlichen Kosten für das Anpassgetriebe und allgemein die hohen Stückkosten für Antriebsstränge bei Elektrofahrzeugen aufgrund der bisher niedrigen Stückzahlen nachteilig sein.

Die EP 2 797 766 A1 offenbart ein Antriebssystem für ein elektrisches Fahrzeug. Das Antriebssystem weist ein Achsgetriebe mit Radwellen, einem Differential und eine Kegelradstufe auf. Separat zum Achsgetriebe ist ein Fahrzeuggetriebe vorgesehen, das einen Antriebsmotor mit dem Achsgetriebe verbindet.

Die US 2005/109549 A1 offenbart ein ebenfalls Antriebssystem mit einem Achsgetriebe und einem separaten Getriebe. Das Achsgetriebe weist Radwellen, ein Differential und eine Kegelradstufe auf.

Die EP 0 456 096 A1 offenbart ein Antriebssystem für einen Bus. Das Antriebssystem umfasst eine Antriebswelle und mindestens eine angetriebene Achse mit zwei Antriebsrädern. Die Achse hat eine Stirnraduntersetzungseinheit zwischen der Welle und einer Zwischennabe.

Der Erfindung liegt somit die Aufgabe zu Grunde, eine kostengünstige und/oder platzsparende Integration eines Anpassgetriebes insbesondere bei einem Elektro-Kraftfahrzeug vorzusehen.

Die Aufgabe wird gelöst durch ein Achsgetriebemodul gemäß dem unabhängigen Anspruch. Vorteilhafte Weiterbildungen sind in den abhängigen Ansprüchen und der Beschreibung angegeben.

Das Achsgetriebemodul ist insbesondere als ein Hinterachsgetriebemodul vorgesehen. Das Achsgetriebemodul ist für ein, vorzugsweise elektrisch angetriebenes, Kraftfahrzeug, bevorzugt Nutzfahrzeug, vorgesehen. Das Achsgetriebemodul weist eine erste Radwelle und eine zweite Radwelle auf, die antreibend mit Rädern des Kraftfahrzeugs verbindbar sind. Das Achsgetriebemodul weist ein Querdifferential auf, das antreibend mit der ersten Radwelle und der zweiten Radwelle verbunden ist. Das Achsgetriebemodul weist eine Kegelradstufe auf, die antreibend mit dem Querdifferential verbunden ist. Das Achsgetriebemodul weist eine erste Stirnradstufe, die antreibend mit der Kegelradstufe verbunden oder verbindbar ist und eine Übersetzung ungleich 1, insbesondere größer als 1, aufweist, auf. Das Achsgetriebemodul weist zusätzlich eine Eingangswelle auf, die sich vorzugsweise in einer Längsrichtung des Kraftfahrzeugs (einer Querrichtung des Achsgetriebemoduls) erstreckt und die antreibend mit der ersten Stirnradstufe verbunden oder verbindbar ist.

Damit kann ein Anpassgetriebe zum Erzielen einer Übersetzung, die die Kegelradstufe allein nicht bereitstellen kann, direkt im Achsgetriebe als Stirnradstufe mit Übersetzung größer als 1 integriert werden. Die Kegelradstufe allein kann üblicherweise aufgrund physikalischer Begrenzungen lediglich eine Maximalübersetzung von rund 5,5 ohne wesentliche Reduzierung der Lebensdauer realisieren. Die benötigte Übersetzung kann jedoch deutlich höher sein, zum Beispiel zwischen 6 und 15. Eine solche Übersetzung kann dadurch erreicht werden, dass die erste Stirnradstufe zusätzlich eine Übersetzung größer als 1 erbringt. Die Integration des Anpassgetriebes direkt in das Achsgetriebemodul spart einerseits Bauraum, da das Anpassgetriebe nicht separat zwischen der Antriebseinheit und dem Achsgetriebe integriert werden muss. Andererseits eröffnet dies die Möglichkeit für ein Modulbausystem für Achsgetriebemodule, die entweder mit einer Stirnradstufe umfassend eine Übersetzung größer als 1 oder einer Stirnradstufe umfassend eine Übersetzung gleich 1 ausgestattet werden können. Eine Stirnradstufe mit einer Übersetzung gleich 1 kann beispielsweise bei einem Durchtrieb verwendet werden. Mittels des Modulbausystems können Produktionskosten erheblich gesenkt werden.

Hervorzuheben ist hierbei insbesondere, dass das Querdifferential, die Radwellen, die Kegelradstufe, die erste Stirnradstufe und die Eingangswelle tatsächlich in einem gemeinsamen Modul, nämlich dem Achsgetriebemodul, integriert sind. Damit sind das Querdifferential, die Radwellen, die Kegelradstufe, die erste Stirnradstufe und die Eingangswelle nicht außerhalb des Achsgetriebemoduls (des Achsgetriebemodulgehäuses soweit vorhanden) angeordnet (z.B. dem Achsgetriebemodul vorgeschaltet), ausgenommen ein Abschnitt der Eingangswelle, der zu Verbindung mit einer Antriebswelle vorgesehen ist.

Wie hierin verwendet, bedeutet der Ausdruck "ungleich 1" oder "größer als 1", dass eine wesentliche Abweichung zu einer Übersetzung von 1 vorliegt (bspw. im Bereich der zweiten Nachkommastelle), die auf einer unterschiedlichen Zähneanzahl der miteinander kämmenden Zahnräder beruht. Für das Beispiel bezogen auf die zweite Nachkommastelle bedeutet das, dass eine Übersetzung von größer oder gleich 1,01 der Anforderung ungleich 1/größer als 1 genügt, während eine Übersetzung von kleiner als 1,01 der Anforderung ungleich 1/größer als 1 nicht genügt.

Insbesondere kann die erste Stirnradstufe ein Antriebszahnrad (Antriebsritzel) aufweisen, das auf der Eingangswelle angeordnet ist. Vorzugsweise kann das Antriebszahnrad drehfest mit der Eingangswelle verbunden oder verbindbar (beispielsweise über ein Schaltelement) sein.

Bevorzugt kann die erste Stirnradstufe ein Abtriebszahnrad aufweisen, das auf einer Zwischenwelle angeordnet ist. Vorzugsweise kann das Abtriebszahnrad drehfest mit der Zwischenwelle verbunden oder verbindbar (beispielsweise über ein Schaltelement) sein.

Das Abtriebszahnrad und das Antriebszahnrad der ersten Stirnradstufe können miteinander kämmen.

Insbesondere kann die Kegelradstufe geradverzahnte, schrägverzahnte oder bogenverzahnte Kegelräder aufweisen. Die bogenverzahnten Kegelräder können vorzugsweise Spiral- oder Hypoidkegelräder sein.

Es ist auch möglich, dass die Eingangswelle mit einer Kardanwelle, die vorzugsweise von einer Antriebseinheit, zum Beispiel einem Elektroantrieb, angetrieben wird, verbunden ist.

Vorzugsweise kann die Kegelradstufe ein Kegelritzel und ein Tellerrad, die miteinander kämmen, aufweisen. Insbesondere kann das Kegelritzel auf der Zwischenwelle angeordnet sein und mit der Zwischenwelle drehfest verbunden oder verbindbar sein.

Die Kegelradstufe kann auch eine Kraftumlenkung um ungefähr 90° auf die Radwellen bewirken.

Bevorzugt kann das Achsgetriebemodul als Nutzfahrzeugachsgetriebemodul, insbesondere Nutzfahrzeughinterachsgetriebemodul, ausgebildet sein.

Insbesondere ist das Achsgetriebemodul zur Verbindung mit einer zentralen und/oder in Fahrzeuglängsrichtung ausgerichteten Antriebseinheit vorzugsweise einem Elektroantrieb ausgebildet.

Vorzugsweise kann die erste Stirnradstufe als Anpassgetriebe dienen, das weder rahmenfest am Kraftfahrzeug noch direkt am Elektromotor angeflanscht ist.

In einer bevorzugten Ausführungsform weist das Achsgetriebemodul ein Achsgetriebemodulgehäuse auf. Das Achsgetriebemodulgehäuse nimmt das Querdifferential, die erste Radwelle, die zweite Radwelle, die Kegelradstufe, die erste Stirnradstufe und/oder zumindest teilweise die Eingangswelle auf.

Insbesondere kann die Eingangswelle mit einer Kardanwelle über einen Flansch verbunden sein. Die Kardanwelle kann vorzugsweise von einer Antriebseinheit, zum Beispiel einem Elektroantrieb, angetrieben werden. Bevorzugt ist der Flansch außerhalb des Achsgetriebemodulgehäuses angeordnet.

In einer besonders bevorzugten Ausführungsform sind das Querdifferential, die erste Radwelle, die zweite Radwelle, die Kegelradstufe, die erste Stirnradstufe und/oder der Eingangswelle in einer Achsbrücke integriert.

In einer Ausführungsform weisen die erste Stirnradstufe und die Kegelradstufe eine gemeinsame Übersetzung größer als 6 und/oder kleiner als 50 auf. Eine Übersetzung in diesem Bereich kann durch die Kegelradstufe herkömmlich nicht erreicht werden.

Vorzugsweise kann die erste Stirnradstufe eine Übersetzung in einem Bereich zwischen 1 und 9 aufweisen. Alternativ oder zusätzlich kann die Kegelradstufe eine Übersetzung in einem Bereich zwischen 1 und 5,5 aufweisen.

In einer weiteren Ausführungsform weisen die erste Stirnradstufe und die Kegelradstufe eine gemeinsame Übersetzung in einem Bereich zwischen 6 und 15, insbesondere zwischen 6 und 12, vorzugsweise zwischen 7 und 8 auf. Damit kann insbesondere die bei Nutzfahrzeugen erforderliche Übersetzung bei Verwendung eines Elektroantriebs erreicht werden.

In einer Ausführungsvariante ist die erste Stirnradstufe direkt antreibend mit einer Zwischenwelle des Achsgetriebemoduls verbunden oder verbindbar. Die Zwischenwelle ist direkt antreibend mit der Kegelradstufe verbunden oder verbindbar. Vorzugsweise kann die Zwischenwelle integral mit einem Kegelritzel der Kegelradstufe ausgebildet sein, zum Beispiel als Kegelritzelwelle.

Insbesondere kann die Zwischenwelle in der Achsbrücke integriert und/oder im Achsgetriebemodulgehäuse aufgenommen sein.

In einer weiteren Ausführungsvariante ist die Kegelradstufe direkt antreibend mit dem Querdifferential, das direkt antreibend mit der ersten Radwelle und der zweiten Radwelle verbunden ist, verbunden.

Insbesondere kann das Querdifferential in der Achsbrücke integriert und/oder im Achsgetriebemodulgehäuse aufgenommen sein.

Erfindungsgemäß weist das Achsgetriebemodul eine zweite Stirnradstufe, die antreibend mit der Kegelradstufe verbunden oder verbindbar ist, auf. Die Eingangswelle ist antreibend mit der zweiten Stirnradstufe verbunden oder verbindbar. Erfindungsgemäß weist das Achsgetriebemodul zusätzlich ein Schaltelement zum Umschalten zwischen der ersten Stirnradstufe und der zweiten Stirnradstufe auf. Damit kann im Achsgetriebemodul zwischen unterschiedlichen Übersetzungen umgeschaltet werden.

Vorzugsweise kann die zweite Stirnradstufe eine Übersetzung in einem Bereich zwischen 1 und 9 aufweisen.

Insbesondere kann die zweite Stirnradstufe direkt antreibend mit der Zwischenwelle verbunden oder verbindbar sein.

In einem weiteren Ausführungsbeispiel stellt das Schaltelement wahlweise eine Antriebsverbindung zwischen der Eingangswelle und der ersten Stirnradstufe oder zwischen der Eingangswelle und der zweiten Stirnradstufe her. Alternativ oder zusätzlich wird das Schaltelement pneumatisch, hydraulisch und/oder elektromechanisch betätigt.

In einer Weiterbildung weist die zweite Stirnradstufe eine Übersetzung ungleich 1, insbesondere größer als 1, und/oder verschieden zu der Übersetzung der ersten Stirnradstufe auf.

In einer bevorzugten Weiterbildung nimmt das Achsgetriebemodulgehäuse zusätzlich das Schaltelement und die zweite Stirnradstufe auf. Alternativ oder zusätzlich sind die zweite Stirnradstufe und das Schaltelement in der Achsbrücke integriert.

Die Erfindung betrifft zudem ein Achsgetriebemodulsystem für ein Kraftfahrzeug, insbesondere Nutzfahrzeug. Das Achsgetriebemodulsystem weist ein Achsgetriebemodul wie hierin offenbart auf. Das Achsgetriebemodul ist wahlweise als ein erstes Achsgetriebemodul oder ein zweites Achsgetriebemodul anpassbar. Die Kegelradstufe, die erste Radwelle, die zweite Radwelle und/oder das Querdifferential des ersten Achsgetriebemoduls und des zweiten Achsgetriebemoduls sind gleich ausgebildet (sind Gleichteile). Die erste Stirnradstufe des ersten Achsgetriebemoduls und die erste Stirnradstufe des zweiten Achsgetriebemoduls sind unterschiedlich ausgebildet, wobei die erste Stirnradstufe des ersten Achsgetriebemoduls eine andere Übersetzung als die erste Stirnradstufe des zweiten Achsgetriebemoduls aufweist.

Mit anderen Worten gesagt, die Kegelradstufe, die Radwellen und/oder das Querdifferential können als Gleichteile für das erste Achsgetriebemodul und das zweite Achsgetriebemodul vorgesehen sein.

Dies hat den Vorteil, dass durch Verwendung vieler Gleichteile die Produktionskosten für das erste und zweite Achsgetriebemodul erheblich gesenkt werden können. Damit können auch Achsgetriebemodule in kleinen Stückzahlen kosteneffizient produziert werden. Dies kann insbesondere beim Übergang von Fahrzeugen mit Verbrennungsmotor und entsprechend angepasstem Achsgetriebe zu Fahrzeugen mit Elektromotor(en) und entsprechend angepasstem Achsgetriebe von Bedeutung sein.

In einer Ausführungsform sind die Eingangswelle des ersten Achsgetriebemoduls und die Eingangswelle des zweiten Achsgetriebemoduls unterschiedlich ausgebildet.

In einer weiteren Ausführungsform sind das Achsgetriebemodulgehäuse des ersten Achsgetriebemoduls und das Achsgetriebemodulgehäuse des zweiten Achsgetriebemoduls unterschiedlich ausgebildet.

In einer bevorzugten Ausführungsform ist mindestens ein Lager des Querdifferentials, der ersten Radwelle, der zweiten Radwelle, der Zwischenwelle und/oder der Eingangswelle des ersten Achsgetriebemoduls und des zweiten Achsgetriebemoduls gleich ausgebildet (Gleichteile). Alternativ oder zusätzlich ist mindestens eine Dichtung, insbesondere des Achsgetriebemodulgehäuses, des ersten Achsgetriebemoduls und des zweiten Achsgetriebemoduls gleich ausgebildet (Gleichteil).

In einer besonders bevorzugten Ausführungsform weist nur das erste Achsgetriebemodul, das Schaltelement und die zweite Stirnradstufe auf. Alternativ oder ergänzend weist nur das zweite Achsgetriebemodul ein Längsdifferential, eine Differentialsperre und/oder eine Durchtriebswelle zur Verbindung mit einer weiteren angetriebenen Achse auf.

In einer bevorzugten Weiterbildung ist eine, insbesondere pneumatische, hydraulische und/oder elektromechanische, Betätigungsvorrichtung des ersten Achsgetriebemoduls und des zweiten Achsgetriebemoduls gleich ausgebildet (Gleichteil). Die Betätigungsvorrichtung des ersten Achsgetriebemoduls betätigt das Schaltelement und die Betätigungsvorrichtung des zweiten Achsgetriebemoduls betätigt die Längsdifferentialsperre. Damit kann auch die Betätigungsvorrichtung und insbesondere die Leitungsverlegung für die Pneumatik, Hydraulik, und/oder Mechatronik als ein Gleichteil verwendet werden.

In einem Ausführungsbeispiel ist das erste Achsgetriebemodul zur Verbindung mit einem, insbesondere zentralen und/oder in Fahrzeuglängsrichtung ausgerichteten, Elektroantrieb ausgebildet.

In einer weiteren Ausführungsbeispiel ist das zweite Achsgetriebemodul ein Durchtrieb, insbesondere einer Tandemachse des Kraftfahrzeugs, ausgebildet.

Bevorzugt wird der Durchtrieb (das Durchtrieb-Achsgetriebemodul) bei zwei angetriebenen Hinterachsen beispielsweise eines Nutzfahrzeugs bei der ersten angetriebenen Achse verwendet, um die Antriebsleistung auf die beiden angetriebenen Achsen aufzuteilen.

In einer Ausführungsvariante weist die erste Stirnradstufe des zweiten Achsgetriebemoduls eine Übersetzung von 1 auf. Damit kann basierend auf dem hierin offenbarten Achsgetriebemodulsystem beispielsweise ein herkömmlicher Durchtrieb realisiert werden, der lediglich eine Übersetzung größer als 1 in der Kegelradstufe aufweist.

Die Erfindung betrifft ferner ein Kraftfahrzeug, vorzugsweise Nutzfahrzeug. Das Kraftfahrzeug weist eine, insbesondere zentrale und/oder in Fahrzeuglängsrichtung ausgerichtete, Antriebseinheit auf. Die Antriebseinheit ist vorzugsweise ein Elektroantrieb. Das Kraftfahrzeug weist zudem ein Achsgetriebemodul wie hierin offenbart auf.

Insbesondere ist das Kraftfahrzeug ein reines Elektrofahrzeug oder ein Hybridfahrzeug, vorzugsweise mit seriellem Hybridantrieb. Mit anderen Worten gesagt, das Kraftfahrzeug weist mindestens einen Elektromotor auf.

Beispielsweise kann das Nutzfahrzeug ein Lastkraftwagen oder ein Omnibus sein.

Die zuvor beschriebenen bevorzugten Ausführungsformen und Merkmale der Erfindung sind beliebig miteinander kombinierbar. Weitere Einzelheiten und Vorteile der Erfindung werden im Folgenden unter Bezug auf die beigefügten Zeichnungen beschrieben. Es zeigen:
- Figur 1: eine Prinzipskizze einer nicht erfindungsgemäßen Ausführungsform eines Achsgetriebemoduls;
- Figur 2: eine schematische Schnittdarstellung der Ausführungsform des Achsgetriebemoduls von Figur 1;
- Figur 3: eine Prinzipskizze einer erfindungsgemäßen Ausführungsform eines Achsgetriebemoduls;
- Figur 4: eine schematische Schnittdarstellung der Ausführungsform des Achsgetriebemoduls von Figur 3;
- Figur 5: eine Prinzipskizze einer weiteren Ausführungsform eines Achsgetriebemoduls; und
- Figur 6: eine schematische Schnittdarstellung der Ausführungsform des Achsgetriebemoduls von Figur 5.

Die in den Figuren gezeigten Ausführungsformen stimmen zumindest teilweise überein, so dass ähnliche oder identische Teile mit den gleichen Bezugszeichen versehen sind und zu deren Erläuterung auch auf die Beschreibung der anderen Ausführungsformen bzw. Figuren verwiesen wird, um Wiederholungen zu vermeiden. Insbesondere weisen in der vorliegenden Offenbarung identische Bezugszeichen auf gleiche Bauteile (gleich aufgebaut und gleich wirkend) hin. Selbstverständlich können auch nur gleich oder ähnlich wirkende Bauteile bei identischen Bezugszeichen verwendet werden. Bezugszeichen, die die gleichen zwei Endziffern aufweisen, sich jedoch in Hunderterschritten unterscheiden (z.B. 16, 116, 216), weisen auf ähnlich oder gleich wirkende Bauteile hin, die insbesondere unterschiedlich aufgebaut sind.

Die vorliegende Offenbarung beruht u.a. auf der Erkenntnis, dass ein Anpass- oder Reduziergetriebe direkt in ein Achsgetriebemodul integriert werden kann. Ein Achsgetriebe ist ein in einer angetriebenen Achse eingebautes Getriebe. Zur Realisierung des Anpassgetriebes kann eine im Achsgetriebemodul vorhandene Stirnradstufe zum Bewirken einer Übersetzung angepasst werden. Damit können auch größere Übersetzungen, die allein durch eine Kegelradstufe des Anpassgetriebes nicht zu verwirklichen sind, erreicht werden.

Dies ermöglicht beim Einsatz eines oder mehrerer Elektromotoren zum Antreiben des Kraftfahrzeugs, dass die erforderliche höhere Übersetzung gegenüber Antrieben mit Verbrennungsmotor erreichbar ist. Eine derartige Lösung benötigt keinen zusätzlichen Bauraum, um beispielsweise ein separates Anpassgetriebe zwischen einen Elektromotor und eine Kardanwelle zu integrieren.

Andererseits ermöglicht dies, ein Baukastensystem zum Aufbau von Achsgetriebemodulen für den Antrieb durch einen Elektromotor und zum Aufbau von Achsgetriebemodulen für den Antrieb durch einen Verbrennungsmotor vorzusehen. Im Einzelnen kann eine Stirnradstufe des Achsgetriebemodulsystems zum optionalen Verwirklichen des Anpassgetriebes verwendet werden. Eine derartige Stirnradstufe ist bspw. bei Durchtrieb-Achsgetriebemodulen vorhanden. Es wird vorgeschlagen, das Achsgetriebemodulsystem so vorzusehen, dass möglichst viele Gleichteile verwendet werden. Zusätzlich soll das Achsgetriebemodulsystem den Aufbau eines ersten Achsgetriebemoduls mit einer modifizierten Stirnradstufe, die das Anpassgetriebe verwirklicht, und den Aufbau eines zweiten Achsgetriebemoduls als Durchtrieb ermöglichen. Ein solches Vorgehen hat den Vorteil, dass Produktionskosten insgesamt gesenkt und insbesondere preiswerte Achsgetriebemodule für Elektrofahrzeuge auch in kleiner Stückzahl herstellbar sind, da viele Gleichteile mit dem heutzutage noch sehr viel häufiger produzierten Durchtrieb-Achsgetriebemodul bestehen.

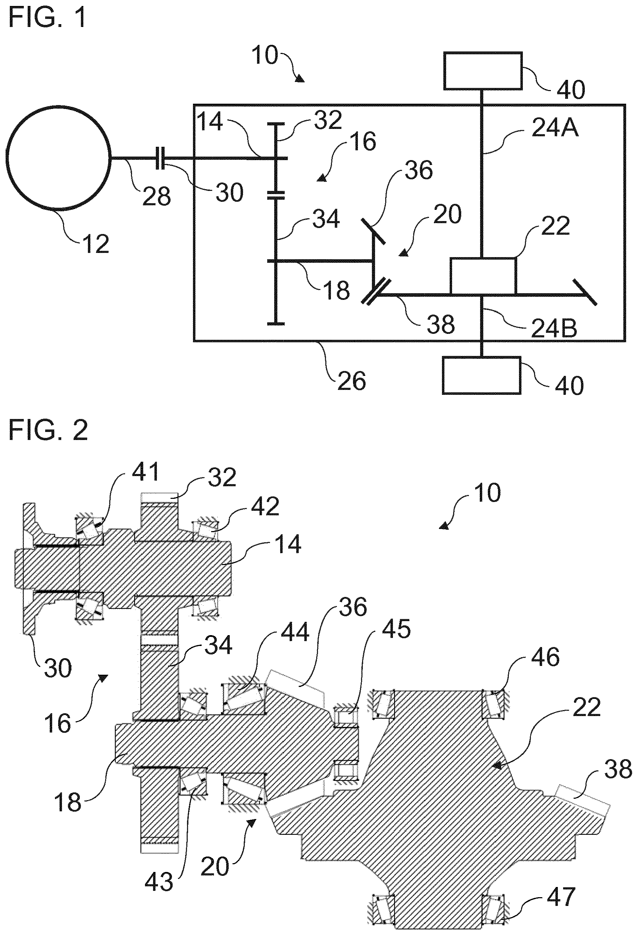

Die Figur 1 zeigt eine Prinzipskizze eines nicht erfindungsgemäßen Achsgetriebemoduls 10 und die Figur 2 zeigt eine schematische Schnittansicht des Achsgetriebemoduls 10. Das Achsgetriebemodul 10 kann beispielsweise als Hinterachsgetriebemodul bei einem Nutzfahrzeug, zum Beispiel einem Lastkraftwagen oder Omnibus, verwendet werden. Insbesondere ist das Achsgetriebemodul 10 zur Verwendung mit einem Elektroantrieb 12 vorgesehen, wie in der Figur 1 beispielhaft dargestellt ist.

In der dargestellten Ausführungsform weist das Achsgetriebemodul 10 eine Eingangswelle 14, eine Stirnradstufe 16, eine Zwischenwelle 18, eine Kegelradstufe 20, ein Querdifferential (Achsdifferential) 22 (nicht im Detail dargestellt) und zwei Radwellen 24A, 24B auf. Zusätzlich weist das Achsgetriebemodul 10 ein Achsgetriebemodulgehäuse 26 auf.

Der Elektroantrieb 12 kann beispielsweise bei einem Lastkraftwagen als zentraler Elektromotor ausgebildet sein, der bspw. in der Fahrzeugmitte angeordnet ist. Bei einem Omnibus kann der Elektroantrieb 12 im Fahrzeugfrontbereich, in der Fahrzeugmitte oder im Fahrzeugheckbereich angeordnet sein.

Der Elektroantrieb 12 ist über eine Antriebswelle 28 ohne Zwischenschaltung eines Anpassgetriebes mit dem Achsgetriebemodul 10 verbunden. Im Einzelnen ist die Antriebswelle 28 drehfest mit einem Flansch 30 verbunden, der wiederum drehfest auf der Eingangswelle 14 angeordnet ist.

Auf die Zwischenschaltung eines Anpassgetriebes kann verzichtet werden, da die Stirnradstufe 16 zusammen mit der Kegelradstufe 20 die erforderliche Übersetzung erbringt. In einigen Ausführungsformen können zwischen der Antriebswelle 28 und der Eingangswelle 14 weitere Antriebswellen vorgesehen sein, zum Beispiel eine Kardanwelle.

Die Stirnradstufe 16 weist ein Antriebszahnrad (Ritzel) 32 und ein Abtriebszahnrad 34 auf. Das Antriebszahnrad 32 ist drehfest auf der Eingangswelle 14 angeordnet. Das Abtriebszahnrad 34 ist drehfest auf der Zwischenwelle 18 angeordnet. Das Antriebszahnrad 32 kämmt mit dem Abtriebszahnrad 34.

Die Stirnradstufe 16 weist eine Übersetzung größer 1 auf. Insbesondere kann die erste Stirnradstufe eine Übersetzung bis 9, zum Beispiel ungefähr 7, bereitstellen. Damit stellt die Stirnradstufe das Anpassgetriebe dar, um zusammen mit der Übersetzung durch die Kegelradstufe 20 die insgesamt erforderliche Übersetzung zwischen der Antriebswelle 28 (dem Elektromotor 12) und den Radwellen 24A, 24B bereitzustellen. Insbesondere weisen die Stirnradstufe 16 und die Kegelradstufe 20 gemeinsam eine Übersetzung größer als 5,0 auf, die aufgrund von physikalischen Beschränkungen nicht von der Kegelradstufe 20 alleine geleistet werden könnte.

Die Stirnradstufe 16 und die Kegelradstufe 20 können zusammen eine Übersetzung bis ungefähr 50 erbringen. Bei der Verwendung mit dem Elektromotor 12 kann eine gemeinsame Übersetzung insbesondere in einem Bereich zwischen 6 und 15, vorzugsweise zwischen 7 und 8, liegen.

Die Stirnradstufe 16 treibt über die Zwischenwelle 18 die Kegelradstufe 20 an. Die Kegelradstufe 20 weist ein Kegelritzel 36 und ein Tellerrad 38 auf. Das Kegelritzel 36 und das Tellerrad 38 kämmen miteinander. Die Kegelradstufe 20 lenkt die von der Zwischenwelle 18 bereitgestellte Kraft um 90° über das Querdifferential 22 auf die Radwellen 24A, 24B um. Die Zwischenwelle 18 ist parallel zu der Eingangswelle 14 angeordnet. Die Eingangswelle 14 erstreckt sich in einer Fahrzeuglängsrichtung. In einigen Ausführungsformen können die Zwischenwelle 18 und das Kegelritzel 36 der Kegelradstufe 20 als integrale Einheit in Form einer Kegelritzelwelle ausgebildet sein. Die Kegelradstufe 20 kann bspw. geradverzahnte, schrägverzahnte oder bogenverzahnte (Spiral- oder Hypoid-) Kegelräder aufweisen.

Die Radwellen 24A, 24B treiben die Räder 40 an. Über das Querdifferential 22 kann auf bekannte Weise ein Ausgleich der Drehzahlen zwischen den beiden Rädern 40 erreicht werden. Im Einzelnen wird dann ein Rad 40 von einer ersten Radwelle 24A angetrieben und das andere Rad 40 wird von der zweiten Radwelle 24B angetrieben.

Das Achsgetriebemodulgehäuse 26 nimmt die Eingangswelle 14 (teilweise), die Stirnradstufe 16, die Zwischenwelle 18, die Kegelradstufe 20, das Querdifferential 22 und die Radwellen 24A, 24B auf. In der Figur 2 ist gezeigt, dass die Eingangswelle 14 im Achsgetriebemodulgehäuse 26 über Lager 41, 42 drehbar gelagert ist. Die Zwischenwelle 18 ist im Achsgetriebemodulgehäuse 26 über Lager 43, 44, 45 drehbar gelagert. Das Querdifferential 22 ist im Achsgetriebemodulgehäuse 26 über Lager 46, 47 drehbar gelagert. Das Achsgetriebemodulgehäuse 26 weist weitere Elemente, wie beispielsweise Dichtungen usw., auf. Das Achsgetriebemodulgehäuse 26 kann in einer nicht dargestellten Achsbrücke umfasst sein.

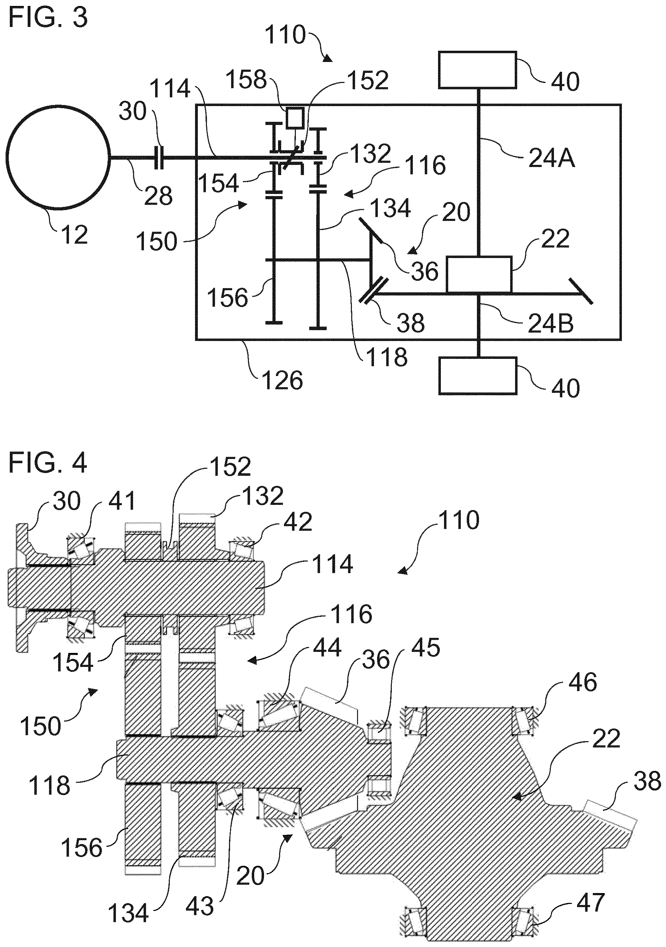

Die Figur 3 zeigt eine Prinzipskizze eines erfindungsgemäßen Achsgetriebemoduls 110 und die Figur 4 zeigt eine schematische Schnittansicht des Achsgetriebemoduls 110. Im Unterschied zum Achsgetriebemodul 10 von Figur 1 und 2 weist das Achsgetriebemodul 110 insbesondere zwei Stirnradstufen 116, 150 und ein Schaltelement 152 auf. Aufgrund des Vorsehens der zwei Stirnradstufen 116, 150 und des Schaltelements 152 können eine Eingangswelle 114 und eine Zwischenwelle 118 zwar gleichen wirken wie die Eingangswelle 14 und die Zwischenwelle 18, jedoch anders aufgebaut sein (zum Beispiel andere und/oder weitere Lagerstellen).

Die erste Stirnradstufe 116 weist ein Antriebszahnrad (Antriebsritzel) 132 und ein damit kämmendes Abtriebszahnrad 134 auf. Die zweite Stirnradstufe 150 weist ein Antriebszahnrad (Antriebsritzel) 154 und ein damit kämmendes Abtriebszahnrad 156 auf. Das Schaltelement 152 verbindet die Eingangswelle 114 wahlweise mit dem Antriebszahnrad 132 der ersten Stirnradstufe 116 oder dem Antriebszahnrad 154 der zweiten Stirnradstufe 150.

Die erste Stirnradstufe 116 und die zweite Stirnradstufe 150 weisen unterschiedliche Übersetzungen auf, die jeweils größer als 1 sein können. Damit kann eine Ausgabe des Elektromotors 12 wahlweise mit zwei unterschiedlichen Übersetzungen auf die Räder 40 übertragen werden. Damit kann beispielsweise sichergestellt werden, dass durch eine der Stirnradstufen 116, 150 eine Übersetzung bereitgestellt wird, mit der eine geforderte Steigfähigkeit für das Kraftfahrzeug erreicht wird. D.h., das Fahrzeug muss in der Lage sein, bei bestimmten Steigungen anfahren zu können. Dazu sind bestimmte Zugkräfte nötig.

Zum Betätigen des Schaltelements 150 kann eine hydraulische, pneumatische und/oder elektromechanische Betätigungsvorrichtung 158 (siehe Figur 3) vorgesehen sein. Die Betätigungsvorrichtung 158 kann beispielsweise ein elektrischer Stellmotor (Aktor) sein.

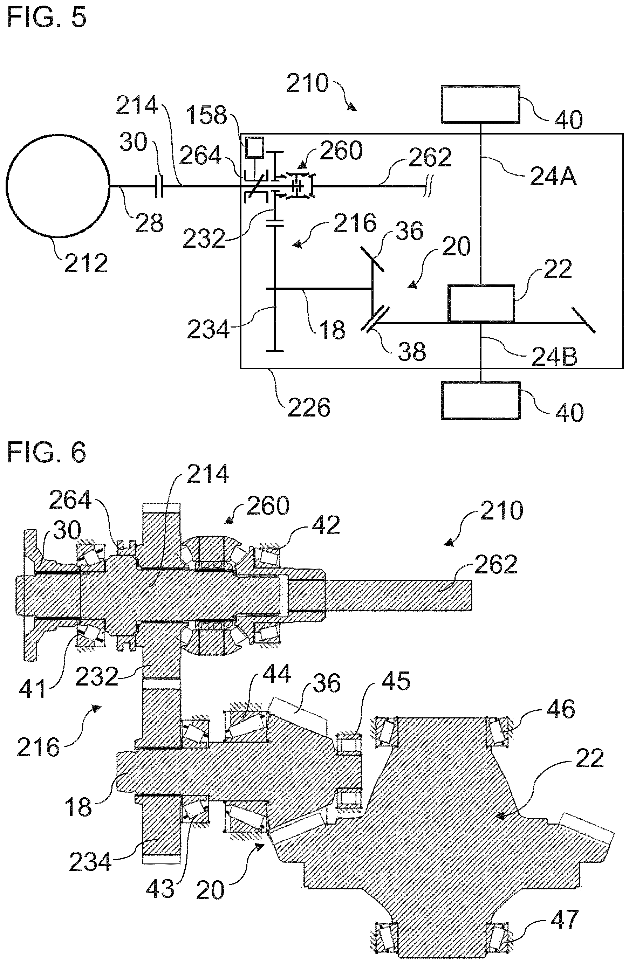

Die Figur 5 zeigt eine Prinzipskizze eines Achsgetriebemoduls 210 und die Figur 6 zeigt eine schematische Schnittansicht des Achsgetriebemoduls 210. Im Unterschied zum Achsgetriebemodul 10 (Figuren 1 und 2) und zum Achsgetriebemodul 110 (Figuren 3 und 4) ist das Achsgetriebemodul 210 als Durchtrieb ausgebildet. Ein Durchtrieb wird bspw. bei Tandemachsen an einem Lastkraftwagen verwendet, wenn beide Achsen der Tandemachse angetrieben sind.

Um als Durchtrieb zu funktionieren, weist das Achsgetriebemodul 210 ein Längsdifferential 260 und eine abschnittsweise dargestellte Durchtriebswelle 262 auf. Das Längsdifferential 260 verteilt die Antriebskraft auf beide Achsen. Im Einzelnen verteilt das Längsdifferential 260 die von der Eingangswelle 214 empfangene Antriebskraft auf die Stirnradstufe 216 und die Durchtriebswelle 262. Die Durchtriebswelle 262 kann antreibend mit einem nicht näher dargestellten weiteren Achsgetriebemodul verbunden sein.

Das Achsgetriebemodul 210 kann zusätzlich ein als Sperre (Längsdifferentialsperre) wirkendes Schaltelement 264 aufweisen. Die Sperre 264 kann eine direkte Antriebsverbindung zwischen der Eingangswelle 214 und der Stirnradstufe 216 herstellen. Die Sperre 264 kann beispielsweise als Klauenkupplung ausgebildet sein.

Die Stirnradstufe 216 kann eine Übersetzung von 1 oder eine Übersetzung größer als 1 aufweisen. Insbesondere bei Verwendung eines Verbrennungsmotors als Antriebseinheit 212 kann die Übersetzung der Stirnradstufe 216 gleich 1 sein. Bei Verwendung eines Elektromotors als die Antriebseinheit 212 kann die Übersetzung der Stirnradstufe 216 größer als 1 sein, ähnlich zu der Stirnradstufe 16 der unter Bezugnahme auf die Figuren 1 und 2 erläuterten Ausführungsform.

Hervorzuheben ist insbesondere, dass die Achsgetriebemodule 10, 110, 210 viele Gleichteile aufweisen, sodass in einem Modulbaukastensystem die Achsgetriebemodule aufgebaut werden können. Die in den Figuren verwendeten identischen Bezugszeichen weisen auf Teile hin, die insbesondere als Gleichteile infrage kommen. Gleichteile können insbesondere die Kegelradstufe 20, die Zwischenwelle 18, das Querdifferential 22, die Radwellen 24A, 24B, die Lager 41-47, der Flansch 30, Dichtungen und/oder die Betätigungsvorrichtung 158 usw. sein.

Zum Beispiel kann die Betätigungsvorrichtung 158 beim Durchtrieb-Achsgetriebemodul 210 (siehe Figuren 5 und 6) zur Betätigung der Sperre 264 verwendet werden. Aufgrund des modularen Aufbaus kann die Betätigungsvorrichtung 158 allerdings auch beim Achsgetriebemodul 110 (siehe Figuren 3 und 4) zur Betätigung des Schaltelements 152 verwendet werden.

Als weiteres Beispiel kann beispielsweise eine als integrierte Kegelritzelwelle ausgebildete Kombination der Zwischenwelle 18 und des Kegelritzels 36 sowohl beim Achsgetriebemodul 10 (siehe Figuren 1 und 2) als auch beim Achsgetriebemodul 210 (siehe Figuren 5 und 6) verwendet werden.

### Bezugszeichenliste

- 10: Achsgetriebemodul
- 12: Elektromotor (Antriebseinheit)
- 14: Eingangswelle
- 16: Stirnradstufe (Anpassgetriebe)
- 18: Zwischenwelle
- 20: Kegelradstufe
- 22: Querdifferential (Achsdifferential)
- 24A: Erste Radwelle
- 24B: Zweite Radwelle
- 26: Achsgetriebemodulgehäuse
- 28: Antriebswelle
- 30: Flansch
- 32: Antriebszahnrad (Ritzel)
- 34: Abtriebszahnrad
- 36: Kegelritzel
- 38: Tellerrad
- 40: Rad
- 41-47: Lager
- 110: Achsgetriebemodul
- 114: Eingangswelle
- 116: Erste Stirnradstufe (Anpassgetriebe)
- 132: Antriebszahnrad (Ritzel)
- 134: Abtriebszahnrad
- 118: Zwischenwelle
- 126: Achsgetriebemodulgehäuse
- 150: Zweite Stirnradstufe (Anpassgetriebe)
- 152: Schaltelement
- 154: Antriebszahnrad (Ritzel)
- 156: Abtriebszahnrad
- 158: Betätigungsvorrichtung
- 210: Achsgetriebemodul (Durchtrieb-Achsgetriebemodul)
- 212: Antriebseinheit
- 214: Eingangswelle
- 216: Stirnradstufe
- 226: Achsgetriebemodulgehäuse
- 232: Antriebszahnrad (Ritzel)
- 234: Abtriebszahnrad
- 260: Längsdifferential
- 262: Durchtriebswelle
- 264: Schaltelement (Differentialsperre)

## Patentansprüche

1. Achsgetriebemodul (110), insbesondere Hinterachsgetriebemodul, für ein, vorzugsweise elektrisch angetriebenes, Kraftfahrzeug, bevorzugt Nutzfahrzeug, aufweisend:
eine erste Radwelle (24A) und eine zweite Radwelle (24B), die antreibend mit Rädern (40) des Kraftfahrzeugs verbindbar sind;
ein Querdifferential (22), das antreibend mit der ersten Radwelle (24A) und der zweiten Radwelle (24B) verbunden ist;
eine Kegelradstufe (20), die antreibend mit dem Querdifferential (22) verbunden ist;
eine erste Stirnradstufe (116), die antreibend mit der Kegelradstufe (20) verbunden oder verbindbar ist und eine Übersetzung ungleich 1, insbesondere größer als 1, aufweist; und
eine Eingangswelle (114), die sich vorzugsweise in einer Längsrichtung des Kraftfahrzeugs erstreckt und die antreibend mit der ersten Stirnradstufe (116) verbunden oder verbindbar ist,
**gekennzeichnet durch:**
eine zweite Stirnradstufe (150), die antreibend mit der Kegelradstufe (20) verbunden oder verbindbar ist, wobei die Eingangswelle (114) antreibend mit der zweiten Stirnradstufe (150) verbunden oder verbindbar ist; und
ein Schaltelement (152) zum Umschalten zwischen der ersten Stirnradstufe (116) und der zweiten Stirnradstufe (150).

2. Achsgetriebemodul (110) nach Anspruch 1, ferner aufweisend:
ein Achsgetriebemodulgehäuse (126), das das Querdifferential (22), die erste Radwelle (24A), die zweite Radwelle (24B), die Kegelradstufe (20), die erste Stirnradstufe (116) und zumindest teilweise die Eingangswelle (114) aufnimmt; und/oder
das Querdifferential (22), die erste Radwelle (24A), die zweite Radwelle (24B), die Kegelradstufe (20), die erste Stirnradstufe (116) und die Eingangswelle (114) in einer Achsbrücke integriert sind.

3. Achsgetriebemodul (110) nach Anspruch 1 oder Anspruch 2, wobei:
die erste Stirnradstufe (116) und die Kegelradstufe (20) eine gemeinsame Übersetzung größer als 6 und/oder kleiner als 50 aufweisen; und/oder
die erste Stirnradstufe (116) und die Kegelradstufe (20) eine gemeinsame Übersetzung in einem Bereich zwischen 6 und 15, insbesondere zwischen 6 und 12, vorzugsweise zwischen 7 und 8, aufweisen.

4. Achsgetriebemodul (110) nach einem der vorherigen Ansprüche, wobei:
die erste Stirnradstufe (116) direkt antreibend mit einer Zwischenwelle (118) des Achsgetriebemoduls (110), die direkt antreibend mit der Kegelradstufe (20) verbunden oder verbindbar ist, verbunden oder verbindbar ist, wobei, vorzugsweise, die Zwischenwelle (118) integral mit einem Kegelritzel (36) der Kegelradstufe (20) ausgebildet ist; und/oder
die Kegelradstufe (20) direkt antreibend mit dem Querdifferential (22), das direkt antreibend mit der ersten Radwelle (24A) und der zweiten Radwelle (24B) verbunden ist, verbunden ist.

5. Achsgetriebemodul (110) nach einem der vorherigen Ansprüche, wobei:
das Schaltelement (152) wahlweise eine Antriebsverbindung zwischen der Eingangswelle (114) und der ersten Stirnradstufe (116) oder zwischen der Eingangswelle (114) und der zweiten Stirnradstufe (150) herstellt; und/oder
das Schaltelement (152) pneumatisch, hydraulisch und/oder elektromechanisch betätigt wird.

6. Achsgetriebemodul (110) nach einem der vorherigen Ansprüche, wobei die zweite Stirnradstufe (150) eine Übersetzung ungleich 1, insbesondere größer als 1, und/oder verschieden zu der Übersetzung der ersten Stirnradstufe (116) aufweist.

7. Achsgetriebemodul (110) nach einem der vorherigen Ansprüche, wobei:
das Achsgetriebemodulgehäuse (126) zusätzlich das Schaltelement (152) und die zweite Stirnradstufe (150) aufnimmt; und/oder
die zweite Stirnradstufe (150) und das Schaltelement (152) in der Achsbrücke integriert sind.

8. Achsgetriebemodulsystem für ein Kraftfahrzeug, insbesondere Nutzfahrzeug, aufweisend:
ein Achsgetriebemodul (110) nach einem der vorherigen Ansprüche, wobei das Achsgetriebemodul (110) als ein erstes Achsgetriebemodul (110) und ein zweites Achsgetriebemodul (210) anpassbar ist, wobei:
die Kegelradstufe (20), die erste Radwelle (24A), die zweite Radwelle (24B) und/oder das Querdifferential (22) des ersten Achsgetriebemoduls (110) und des zweiten Achsgetriebemoduls (210) gleich ausgebildet sind; und
die erste Stirnradstufe (116) des ersten Achsgetriebemoduls (110) und die erste Stirnradstufe (216) des zweiten Achsgetriebemoduls (210) unterschiedlich ausgebildet sind, wobei die erste Stirnradstufe (116) des ersten Achsgetriebemoduls (110) eine andere Übersetzung als die erste Stirnradstufe (216) des zweiten Achsgetriebemoduls (210) aufweist.

9. Achsgetriebemodulsystem nach Anspruch 8, wobei:
die Eingangswelle (114) des ersten Achsgetriebemoduls (110) und die Eingangswelle (214) des zweiten Achsgetriebemoduls (210) unterschiedlich ausgebildet sind; und/oder
das Achsgetriebemodulgehäuse (126) des ersten Achsgetriebemoduls (110) und das Achsgetriebemodulgehäuse (226) des zweiten Achsgetriebemoduls (210) unterschiedlich ausgebildet sind; und/oder
mindestens ein Lager (41-47) der ersten Radwelle (24A), der zweiten Radwelle (24B), der Zwischenwelle (118) und/oder der Eingangswelle (114; 214) des ersten Achsgetriebemoduls (110) und des zweiten Achsgetriebemoduls (210) gleich ausgebildet ist; und/oder
mindestens eine Dichtung, insbesondere des Achsgetriebemodulgehäuses (126, 226), des ersten Achsgetriebemoduls (110) und des zweiten Achsgetriebemoduls (210) gleich ausgebildet ist.

10. Achsgetriebemodulsystem nach Anspruch 8 oder Anspruch 9, wobei:
nur das erste Achsgetriebemodul (110) das Schaltelement (152) und die zweite Stirnradstufe (150) aufweist; und/oder
nur das zweite Achsgetriebemodul (210) ein Längsdifferential (260), eine Differentialsperre (264) und/oder eine Durchtriebswelle (262) zur Verbindung mit einer weiteren angetriebenen Achse aufweist.

11. Achsgetriebemodulsystem nach Anspruch 10, wobei
eine, insbesondere pneumatische, hydraulische und/oder elektromechanische, Betätigungsvorrichtung (158) des ersten Achsgetriebemoduls (110) und des zweiten Achsgetriebemoduls (210) gleich ausgebildet ist, wobei die Betätigungsvorrichtung (158) des ersten Achsgetriebemoduls (110) das Schaltelement (152) betätigt und die Betätigungsvorrichtung (158) des zweiten Achsgetriebemoduls (210) die Differentialsperre (264) betätigt.

12. Achsgetriebemodulsystem nach einem der Ansprüche 8 bis 11, wobei:
das erste Achsgetriebemodul (110) zur Verbindung mit einem, insbesondere zentralen und/oder in Fahrzeuglängsrichtung ausgerichteten, Elektroantrieb (12) ausgebildet ist; und/oder
das zweite Achsgetriebemodul (210) als ein Durchtrieb, insbesondere einer Tandemachse des Kraftfahrzeugs, ausgebildet ist.

13. Achsgetriebemodulsystem nach einem der Ansprüche 8 bis 12, wobei die erste Stirnradstufe (216) des zweiten Achsgetriebemoduls (210) eine Übersetzung von 1 aufweist.

14. Kraftfahrzeug, vorzugsweise Nutzfahrzeug, aufweisend:
eine, insbesondere zentrale und/oder in Fahrzeuglängsrichtung ausgerichtete, Antriebseinheit (212), bevorzugt einen Elektroantrieb; und
ein Achsgetriebemodul (110) nach einem der Ansprüche 1 bis 7.

## Claims

1. An axle drive module (110), in particular a rear axle drive module, for a (preferably electrically driven) motor vehicle, preferably a commercial vehicle, having:
a first wheel shaft (24A) and a second wheel shaft (24B) which can be connected in a driving manner to wheels (40) of the motor vehicle;
a transverse differential (22) which is connected in a driving manner to the first wheel shaft (24A) and the second wheel shaft (24B);
a bevel gear stage (20) which is connected in a driving manner to the transverse differential (22);
a first spur gear stage (116) which is connected or can be connected in a driving manner to the bevel gear stage (20) and has a transmission ratio which does not equal 1, in particular is greater than 1; and
an input shaft (114) which preferably extends in a longitudinal direction of the motor vehicle and which is connected or can be connected in a driving manner to the first spur gear stage (116),
**characterized by:**
a second spur gear stage (150) which is connected or can be connected in a driving manner to the bevel gear stage (20), the input shaft (114) being connected or being capable of being connected in a driving manner to the second spur gear stage (150); and
a switching element (152) for switching over between the first spur gear stage (116) and the second spur gear stage (150).

2. The axle drive module (110) according to Claim 1, having, furthermore:
an axle drive module housing (126) which receives the transverse differential (22), the first wheel shaft (24A), the second wheel shaft (24B), the bevel gear stage (20), the first spur gear stage (116) and at least partially the input shaft (114); and/or
the transverse differential (22), the first wheel shaft (24A), the second wheel shaft (24B), the bevel gear stage (20), the first spur gear stage (116) and the input shaft (114) are integrated into an axle bridge.

3. The axle drive module (110) according to Claim 1 or Claim 2:
the first spur gear stage (116) and the bevel gear stage (20) having a joint transmission ratio of greater than 6 and/or smaller than 50; and/or
the first spur gear stage (116) and the bevel gear stage (20) having a joint transmission ratio in a range between 6 and 15, in particular between 6 and 12, preferably between 7 and 8.

4. The axle drive module (110) according to one of the preceding claims:
the first spur gear stage (116) being connected or being capable of being connected in a directly driving manner to an intermediate shaft (118) of the axle drive module (110), which intermediate shaft (118) is connected or can be connected in a directly driving manner to the bevel gear stage (20), the intermediate shaft (118) preferably being configured integrally with a bevel pinion (36) of the bevel gear stage (20); and/or
the bevel gear stage (20) being connected in a directly driving manner to the transverse differential (22) which is connected in a directly driving manner to the first wheel shaft (24A) and the second wheel shaft (24B) .

5. The axle drive module (110) according to one of the preceding claims:
the switching element (152) selectively establishing a drive connection between the input shaft (114) and the first spur gear stage (116) or between the input shaft (114) and the second spur gear stage (150); and/or
the switching element (152) being actuated pneumatically, hydraulically and/or electromechanically.

6. The axle drive module (110) according to one of the preceding claims, the second spur gear stage (150) having a transmission ratio which does not equal 1, in particular of greater than 1, and/or is different from the transmission ratio of the first spur gear stage (116) .

7. The axle drive module (110) according to one of the preceding claims:
the axle drive module housing (126) additionally receiving the switching element (152) and the second spur gear stage (150), and/or
the second spur gear stage (150) and the switching element (152) being integrated into the axle bridge.

8. An axle drive module system for a motor vehicle, in particular a commercial vehicle, having:
an axle drive module (110) according to one of the preceding claims, it being possible for the axle drive module (110) to be adapted as a first axle drive module (110) and a second axle drive module (210):
the bevel gear stage (20), the first wheel shaft (24A), the second wheel shaft (24B) and/or the transverse differential (22) of the first axle drive module (110) and of the second axle drive module (210) being of identical configuration; and
the first spur gear stage (116) of the first axle drive module (110) and the first spur gear stage (216) of the second axle drive module (210) being of different configuration, the first spur gear stage (116) of the first axle drive module (110) having a different transmission ratio to the first spur gear stage (216) of the second axle drive module (210).

9. The axle drive module system according to Claim 8:
the input shaft (114) of the first axle drive module (110) and the input shaft (214) of the second axle drive module (210) being of different configuration; and/or
the axle drive module housing (126) of the first axle drive module (110) and the axle drive module housing (226) of the second axle drive module (210) being of different configuration; and/or
at least one bearing (41-47) of the first wheel shaft (24A), of the second wheel shaft (24B), of the intermediate shaft (118) and/or of the input shaft (114; 214) of the first axle drive module (110) and of the second axle drive module (210) being of identical configuration; and/or
at least one seal, in particular of the axle drive module housing (126, 226), of the first axle drive module (110) and of the second axle drive module (210) being of identical configuration.

10. The axle drive module system according to Claim 8 or Claim 9:
only the first axle drive module (110) having the switching element (152) and the second spur gear stage (150); and/or
only the second axle drive module (210) having a longitudinal differential (260), a differential lock (264) and/or a through-connected drive shaft (262) for the connection to a further driven axle.

11. The axle drive module system according to Claim 10,
an, in particular, pneumatic, hydraulic and/or electromechanical actuating apparatus (158) of the first axle drive module (110) and of the second axle drive module (210) being of identical configuration, the actuating apparatus (158) of the first axle drive module (110) actuating the switching element (152), and the actuating apparatus (158) of the second axle drive module (210) actuating the differential lock (264).

12. The axle drive module system according to one of Claims 8 to 11:
the first axle drive module (110) being configured for connection to an electric drive (12) which is, in particular, central and/or oriented in the vehicle longitudinal direction; and/or
the second axle drive module (210) being configured as a through-connected drive, in particular of a tandem axle of the motor vehicle.

13. The axle drive module system according to one of Claims 8 to 12, the first spur gear stage (216) of the second axle drive module (210) having a transmission ratio of 1.

14. A motor vehicle, preferably a commercial vehicle, having:
a drive unit (212) which is, in particular, central and/or oriented in the vehicle longitudinal direction, preferably an electric drive; and
an axle drive module (110) according to one of Claims 1 to 7.

## Revendications

1. Module de transmission d'essieu (110), en particulier module de transmission d'essieu arrière, pour un véhicule automobile, de préférence un véhicule utilitaire, de préférence à entraînement électrique, présentant :
un premier arbre de roue (24A) et un deuxième arbre de roue (24B) qui peuvent être connectés par entraînement à des roues (40) du véhicule automobile ;
un différentiel transversal (22) qui est connecté par entraînement au premier arbre de roue (24A) et au deuxième arbre de roue (24B) ;
un étage de pignon conique (20) qui est connecté par entraînement au différentiel transversal (22) ;
un premier étage de pignon droit (116) qui est ou peut être connecté par entraînement à l'étage de pignon conique (20) et qui présente un rapport de démultiplication différent de 1, en particulier supérieur à 1 ; et
un arbre d'entrée (114), qui s'étend de préférence dans une direction longitudinale du véhicule automobile et qui est ou peut être connecté par entraînement au premier étage de pignon droit (116),
**caractérisé par** :
un deuxième étage de pignon droit (150) qui est ou peut être connecté par entraînement à l'étage de pignon conique (20), l'arbre d'entrée (114) étant ou pouvant être connecté par entraînement au deuxième étage de pignon droit (150) ; et
un élément de commutation (152) pour commuter entre le premier étage de pignon droit (116) et le deuxième étage de pignon droit (150).

2. Module de transmission d'essieu (110) selon la revendication 1, présentant en outre :
un boîtier de module de transmission d'essieu (126), qui reçoit le différentiel transversal (22), le premier arbre de roue (24A), le deuxième arbre de roue (24B), l'étage de pignon conique (20), le premier étage de pignon droit (116) et au moins en partie l'arbre d'entrée (114) ; et/ou
le différentiel transversal (22), le premier arbre de roue (24A), le deuxième arbre de roue (24B), l'étage de pignon conique (20), le premier étage de pignon droit (116) et l'arbre d'entrée (114) sont intégrés dans un pont d'essieu.

3. Module de transmission d'essieu (110) selon la revendication 1 ou la revendication 2, dans lequel :
le premier étage de pignon droit (116) et l'étage de pignon conique (20) présentent un rapport de démultiplication commun supérieur à 6 et/ou inférieur à 50 ; et/ou
le premier étage de pignon droit (116) et l'étage de pignon conique (20) présentent un rapport de démultiplication commun dans une plage comprise entre 6 et 15, notamment entre 6 et 12, préférablement entre 7 et 8.

4. Module de transmission d'essieu (110) selon l'une quelconque des revendications précédentes, dans lequel :
le premier étage de pignon droit (116) est ou peut être connecté directement par entraînement à un arbre intermédiaire (118) du module de transmission d'essieu (110) qui est ou peut être connecté directement par entraînement à l'étage de pignon conique (20), de préférence l'arbre intermédiaire (118) étant réalisé intégralement avec un pignon conique (36) de l'étage de pignon conique (20) ; et/ou
l'étage de pignon conique (20) est connecté directement par entraînement à un différentiel transversal (22) qui est connecté directement par entraînement au premier arbre de roue (24A) et au deuxième arbre de roue (24B).

5. Module de transmission d'essieu (110) selon l'une quelconque des revendications précédentes, dans lequel :
l'élément de commutation (152) établit de manière sélective une liaison par entraînement entre l'arbre d'entrée (114) et le premier étage de pignon droit (116) ou entre l'arbre d'entrée (114) et le deuxième étage de pignon droit (150) ; et/ou
l'élément de commutation (152) est actionné pneumatiquement, hydrauliquement et/ou électromécaniquement.

6. Module de transmission d'essieu (110) selon l'une quelconque des revendications précédentes, dans lequel le deuxième étage de pignon droit (150) présente un rapport de démultiplication différent de 1, en particulier supérieur à 1, et/ou différent du rapport de démultiplication du premier étage de pignon droit (116).

7. Module de transmission d'essieu (110) selon l'une quelconque des revendications précédentes, dans lequel :
le boîtier de module de transmission d'essieu (126) reçoit en outre l'élément de commutation (152) et le deuxième étage de pignon droit (150) ; et/ou
le deuxième étage de pignon droit (150) et l'élément de commutation (152) sont intégrés dans le pont d'essieu.

8. Système de module de transmission d'essieu pour un véhicule automobile, en particulier un véhicule utilitaire, présentant :
un module de transmission d'essieu (110) selon l'une quelconque des revendications précédentes, le module de transmission d'essieu (110) pouvant être adapté en tant que premier module de transmission d'essieu (110) et deuxième module de transmission d'essieu (210),
l'étage de pignon conique (20), le premier arbre de roue (24A), le deuxième arbre de roue (24B) et/ou le différentiel transversal (22) du premier module de transmission d'essieu (110) et du deuxième module de transmission d'essieu (210) étant réalisés de manière identique ; et
le premier étage de pignon droit (116) du premier module de transmission d'essieu (110) et le premier étage de pignon droit (216) du deuxième module de transmission d'essieu (210) étant réalisés différemment, le premier étage de pignon droit (116) du premier module de transmission d'essieu (110) présentant un autre rapport de démultiplication que le premier étage de pignon droit (216) du deuxième module de transmission d'essieu (210).

9. Système de module de transmission d'essieu selon la revendication 8, dans lequel :
l'arbre d'entrée (114) du premier module de transmission d'essieu (110) et l'arbre d'entrée (214) du deuxième module de transmission d'essieu (210) sont réalisés différemment ; et/ou
le boîtier de module de transmission d'essieu (126) du premier module de transmission d'essieu (110) et le boîtier de module de transmission d'essieu (226) du deuxième module de transmission d'essieu (210) sont réalisés différemment ; et/ou
au moins un palier (41-47) du premier arbre de roue (24A), du deuxième arbre de roue (24B), de l'arbre intermédiaire (118) et/ou de l'arbre d'entrée (114 ; 214) du premier module de transmission d'essieu (110) et du deuxième module de transmission d'essieu (210) sont réalisés de manière identique et/ou
au moins un joint d'étanchéité, en particulier du boîtier de module de transmission d'essieu (126, 226) du premier module de transmission d'essieu (110) et du deuxième module de transmission d'essieu (210) sont réalisés de manière identique.

10. Système de module de transmission d'essieu selon la revendication 8 ou la revendication 9, dans lequel :
seulement le premier module de transmission d'essieu (110) présente l'élément de commutation (152) et le deuxième étage de pignon droit (150) ; et/ou
seulement le deuxième module de transmission d'essieu (210) présente un différentiel longitudinal (260), un verrou de différentiel (264) et/ou un arbre de prise directe (262) pour la connexion à un essieu moteur supplémentaire.

11. Système de module de transmission d'essieu selon la revendication 10, dans lequel
un dispositif d'actionnement (158), en particulier pneumatique, hydraulique et/ou électromécanique, du premier module de transmission d'essieu (110) et du deuxième module de transmission d'essieu (210) sont réalisés de manière identique, le dispositif d'actionnement (158) du premier module de transmission d'essieu (110) actionnant l'élément de commutation (152) et le dispositif d'actionnement (158) du deuxième module de transmission d'essieu (210) actionnant le verrou de différentiel (264).

12. Système de module de transmission d'essieu selon l'une quelconque des revendications 8 à 11, dans lequel :
le premier module de transmission d'essieu (110) est réalisé pour la liaison avec un entraînement électrique (12) notamment central et/ou orienté dans la direction longitudinale du véhicule ; et/ou
le deuxième module de transmission d'essieu (210) est réalisé sous forme de prise directe, en particulier sous forme d'essieu en tandem du véhicule automobile.

13. Système de module de transmission d'essieu selon l'une quelconque des revendications 8 à 12, dans lequel le premier étage de pignon droit (216) du deuxième module de transmission d'essieu (210) présente un rapport de démultiplication de 1.

14. Véhicule automobile, de préférence véhicule utilitaire, présentant :
une unité d'entraînement (212) notamment centrale et/ou orientée dans la direction longitudinale du véhicule, de préférence un entraînement électrique ; et
un module de transmission d'essieu (110) selon l'une quelconque des revendications 1 à 7.
